## Europäisches Patentamt

## European Patent Office

## Office européen des brevets

(11) Veröffentlichungsnummer: **0 044 999**
**B1**

(12) **EUROPÄISCHE PATENTSCHRIFT**

(45) Veröffentlichungstag der Patentschrift:
**27.12.84**

(21) Anmeldenummer: **81105470.9**

(22) Anmeldetag: **13.07.81**

(51) Int. Cl.³: **H 02 H 3/33, H 01 H 83/14**

(54) Fehlerstromschutzschalter, der auf Fehlerströme mit Gleichstromkomponenten anspricht.

(30) Priorität: **28.07.80 DE 3028595**

(43) Veröffentlichungstag der Anmeldung:
**03.02.82 Patentblatt 82/5**

(45) Bekanntmachung des Hinweises auf die Patenterteilung:
**27.12.84 Patentblatt 84/52**

(84) Benannte Vertragsstaaten:
**AT BE CH DE FR GB IT LI NL SE**

(56) Entgegenhaltungen:
**DE - B - 2 036 497**
**DE - B - 2 044 302**
**DE - B - 2 348 881**

(73) Patentinhaber: **Siemens Aktiengesellschaft, Berlin und München Wittelsbacherplatz 2, D-8000 München 2 (DE)**

(72) Erfinder: **Rösch, Helmut, Schulterbreiten Strasse 6, D-8411 Ellsbrunn (DE)**
Erfinder: **Solleder, Reinhard, Maxstrasse 6, D-8411 Hainsacker (DE)**
Erfinder: **Stich, Heinz, Friedrich-Ebert-Strasse 10, D-8400 Regensburg (DE)**

ACTORUM AG

**Beschreibung**

Die Erfindung bezieht sich auf einen Fehlerstromschutzschalter, der auf Fehlerströme mit Gleichstromkomponenten anspricht, dessen Magnetkern des Summenstromwandlers einen Induktionshub hat, der für einen in seiner Primärwicklung fliessenden pulsierenden Gleichstromfehlerstrom ausreichend gross ist, um in der Sekundärwicklung eine zum Betätigen des Auslösemagneten mittels seiner Auslösewicklung erforderliche Spannung zu induzieren, und bei dem zwischen Sekundärwicklung und Auslösewicklung ein Kondensator eingeschaltet ist, wobei der dadurch gebildete Schwingkreis auf die Frequenz der Spannung abgestimmt ist, die in der Sekundärwicklung von einem in den Primärwicklungen des Summenstromwandlers fliessenden pulsierenden Gleichstromfehlerstrom induziert wird. Ein solcher Fehlerstromschutzschalter ist bekannt (DE-B2 2 348 881, Fig. 8). Hierbei ist sogenanntes F-Material eingesetzt (DE-B2 2 044 302).

Dabei wird davon ausgegangen, dass durch die Kombination mit der auch für sich bekannten Massnahme, zwischen Sekundärwicklung und Auslösewicklung einen Kondensator einzuschalten, wobei der gebildete Schwingkreis auf die Frequenz der Spannung abgestimmt ist, die in der Sekundärwicklung von einem in den Primärwicklungen des Summenstromwandlers fliessenden pulsierenden Gleichstromfehlerstrom induziert wird (DE-B2 2 036 497), eine weitere wesentliche Steigerung der Empfindlichkeit gegen Gleichstromkomponenten zu erzielen ist, wenn es gelingt, die Induktionsverluste zu verringern.

Der Erfindung liegt die Aufgabe zugrunde, einen Fehlerstromschutzschalter zu entwickeln, dessen Ansprechempfindlichkeit gegen Fehlerströme mit Gleichstromkomponenten weiter gesteigert wird, als es allein durch die zusammengenommenen Massnahmen nach DE-B2 2 036 497 und DE-B2 2 044 302 erwartet werden kann.

Die Lösung der geschilderten Aufgabe besteht nach der Erfindung darin, dass der Magnetkern eine dynamische Differenzinduktion, $\Delta$ Bdyn, zwischen der maximalen Induktion, Bmax, und der dynamischen Remanenzinduktion, Brdyn, von

$$\Delta\,\text{Bdyn} \geqq 0{,}1\,\text{T}$$

aufweist und dass das Verhältnis der statischen Differenzinduktion $\Delta$ Bstat, zwischen der maximalen Induktion, Bmax, und der statischen Remanenzinduktion, Brstat, zur dynamischen Differenzinduktion, $\Delta$ Bdyn, der Beziehung genügt:

$$\frac{\Delta\,\text{Bstat}}{\Delta\,\text{Bdyn}} \leqq 1{,}3.$$

Der Erfindung liegt dabei weiter die Erkenntnis zugrunde, dass selbst bei Doppelweggleichrichtung der Fehlerstrom ein Einweggleichstrom ist, also immer eine Ruhepause aufweist. Während einer solchen Ruhepause geht der Arbeitspunkt im Kernmaterial auf die statische Hysteresisschleife über. Beim Fehlerstromschutzschalter nach der Erfindung werden die Induktionsverluste hinsichtlich des theoretischen Wertes, den man beim Durchlaufen der dynamischen Hysteresiskurve erzielen könnte, soweit vermindert, dass die Empfindlichkeit gegen Gleichstromkomponenten in Fehlerströmen über die Summe der Massnahmen, F-Material und Resonanzabstimmung mit einem Kondensator, hinaus gesteigert wird.

Die Erfindung soll nun anhand eines in der Zeichnung grob schematisch wiedergegebenen Ausführungsbeispiels näher erläutert werden:

In Fig. 1 ist der prinzipielle Aufbau des Fehlerstromschutzschalters wiedergegeben.

In Fig. 2 ist ein Diagramm dargestellt; auf der Abszisse ist die Feldstärke und auf der Ordinate die magnetische Induktion des Materials des Kernes des Summenstromwandlers aufgetragen.

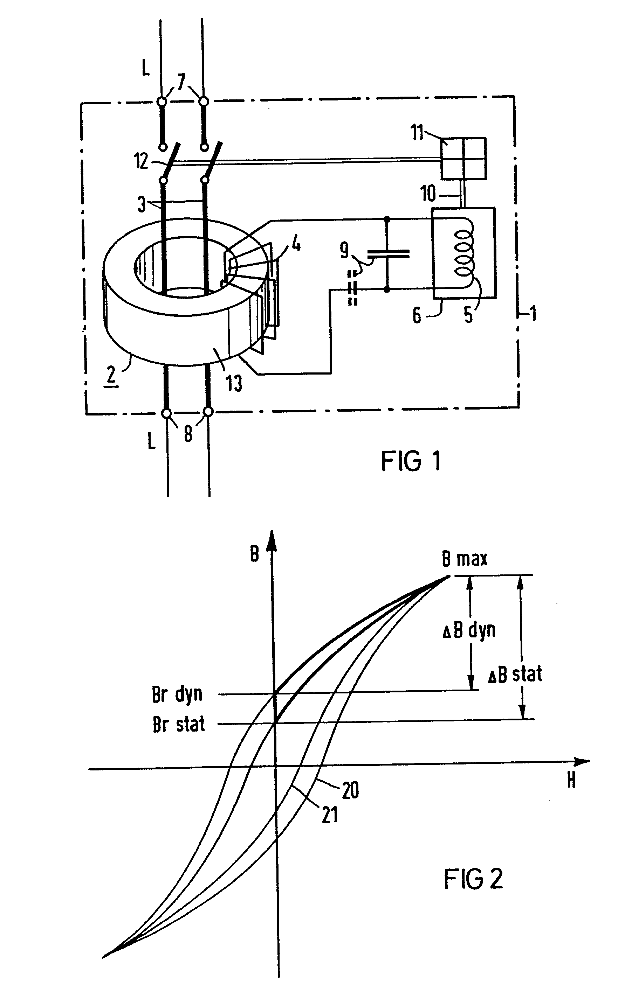

Der Fehlerstromschutzschalter 1 nach Fig. 1 besteht im wesentlichen aus dem Summenstromwandler 2 mit den durchgeführten zu überwachenden Leitern, die die Primärwicklung 3 darstellen, und der Sekundärwicklung 4, die mit der Auslösewicklung 5 des Auslösers 6 verbunden ist. Der Auslöser 6 kann ein Haltemagnet sein. Der zu überwachende Verbraucher und das Versorgungsnetz ist wahlweise an den Klemmen 7 oder 8 angeschlossen vorzustellen. Das Versorgungsnetz wird an den Klemmen 8 angeschlossen.

Zwischen der Sekundärwicklung 4 und der Auslösewicklung 5 ist ein Kondensator 9 eingeschaltet, der parallel oder in Reihe liegen kann. Der dadurch gebildete Schwingkreis ist auf die Frequenz der Spannung abgestimmt, die in der Sekundärwicklung 4 von einem in den Primärwicklungen 3 des Summenstromwandlers fliessenden pulsierenden Gleichstromfehlerstrom induziert wird. Der Auslöser 6, ein beispielsweise Haltemagnet, wirkt über ein mechanisches Verbindungsteil 10 auf das Schaltschloss 11 ein. Wenn das Schaltschloss 11 entklinkt wird, werden die Kontakte 12 geöffnet und der zu überwachende Verbraucher vom Netz abgeschaltet.

Wesentlich ist nun, dass das Material des Magnetkerns 13 des Summenstromwandlers 2 den Beziehungen genügt:

$$\Delta\,\text{Bdyn} \geqq 0{,}1\,\text{T}$$

$$\frac{\Delta\,\text{Bstat}}{\Delta\,\text{Bdyn}} \leqq 1{,}3.$$

In Fig. 2 sind die in der vorgenannten Beziehung enthaltenen Grössen im Prinzip dargestellt, der Anschaulichkeit wegen jedoch nicht der Beziehung selbst entsprechend. Mit B ist die magnetische Induktion in der Einheit T (Tesla) in der Formelbeziehung bezeichnet. Die Abstimmung des Resonanzkreises kann in der Weise erfolgen, wie dies in der DE-B2 2 036 497 geschildert ist.

Durch die besondere Ausbildung der Magnetkerne kann man auch ohne die geschilderte Resonanzabstimmung die Empfindlichkeit gegen Gleichstromkomponenten erhöhen, wenn auch nicht in einem Ausmass, wie es bei der Kombination der geschilderten Massnahmen der Fall ist. Im Diagramm nach Fig. 2 ist mit 20 die dynamische Hysteresisschleife und mit 21 die statische Hysteresisschleife bezeichnet.

**Patentanspruch**

Fehlerstromschutzschalter (1), der auf Fehlerströme mit Gleichstromkomponenten anspricht, dessen Magnetkern des Summenstromwandlers (2) einen Induktionshub hat, der für einen in seiner Primärwicklung (3) fliessenden pulsierenden Gleichstromfehlerstrom ausreichend gross ist, um in der Sekundärwicklung (4) eine zum Betätigen des Auslösemagneten mittels seiner Auslösewicklung (5) erforderliche Spannung zu induzieren, und bei dem zwischen Sekundärwicklung (4) und Auslösewicklung (5) ein Kondensator (9) eingeschaltet ist, wobei der dadurch gebildete Schwingkreis auf die Frequenz der Spannung abgestimmt ist, die in der Sekundärwicklung (4) von einem in den Primärwicklungen (3) des Summenstromwandlers (2) fliessenden pulsierenden Gleichstromfehlerstrom induziert wird, dadurch gekennzeichnet, dass der Magnetkern (13) eine dynamische Differenzinduktion, $\Delta$ Bdyn, zwischen der maximalen Induktion, Bmax, und der dynamischen Remanenzinduktion, Brdyn, von

$$\Delta \, \text{Bdyn} \geqq 0{,}1 \, \text{T}$$

aufweist und dass das Verhältnis der statischen Differenzinduktion, $\Delta$ Bstat, zwischen der maximalen Induktion, Bmax, und der statischen Remanenzinduktion, Brstat, zur dynamischen Differenzinduktion, $\Delta$ Bdyn, der Beziehung genügt:

$$\frac{\Delta \, \text{Bstat}}{\Delta \, \text{Bdyn}} \leqq 1{,}3.$$

**Claim**

Fault current protective switch (1) which responds to fault currents having d.c. components, where the magnetic core of the summing current transformer (2) possesses an induction of sufficient magnitude to induce in the secondary winding (4) a voltage necessary to actuate the release magnet by its release winding (5) when a pulsating d.c. fault current flows in its primary winding (3), and wherein a capacitor (9) is connected between the secondary winding (4) and the release winding (5) to form an oscillatory circuit tuned to the frequency of the voltage induced in the secondary winding (4) by a pulsating d.c. fault current flowing in the primary windings (3) of the summing current transformer (2), characterised in that the magnetic core (13) possesses a dynamic differential induction $\Delta$ Bdyn between the maximum induction Bmax and the dynamic remanence induction Brdyn of:

$$\Delta \, \text{Bdyn} \geqq 0.1 \, \text{T}$$

and that the ratio of the static differential induction $\Delta$ Bstat, between the maximum induction Bmax and the static remanence induction Brstat, to the dynamic differential induction $\Delta$ Bdyn fulfils the equation:

$$\frac{\Delta \, \text{Bstat}}{\Delta \, \text{Bdyn}} \leqq 1.3.$$

**Revendication**

Disjoncteur à courant de défaut (1) sensible à des courants de défaut comportant des composantes de courant continu, dont le noyau magnétique du transformateur de sommation (2) présente une excursion de son induction qui est, pour un courant de défaut en courant continu pulsé qui passe par son enroulement primaire (3), suffisamment grande pour induire dans l'enroulement secondaire (4) une tension qui est nécessaire pour commander l'électro-aimant de déclenchement à l'aide de son enroulement de déclenchement (5), et dans lequel un condensateur (9) est monté entre l'enroulement secondaire (4) et l'enroulement de déclenchement (5), le circuit oscillant ainsi formé étant accordé sur la fréquence de la tension qui est induite dans l'enroulement secondaire (4) par un courant de défaut de courant continu pulsé passant dans les enroulements primaires (3) du transformateur de sommation (2), caractérisé par le fait que le noyau magnétique (13) possède une induction différentielle dynamique, $\Delta$ Bdyn, entre l'induction maximale, Bmax, et l'induction rémanente dynamique, Brdyn, de

$$\Delta \, \text{Bdyn} \geqq 0.1 \, \text{T}$$

et que le rapport de l'induction différentielle statique, $\Delta$ Bstat, entre l'induction maximale, Bmax, et l'induction rémanente statique, Brstat, à l'induction différentielle dynamique, $\Delta$ Bdyn, satisfait la relation:

$$\frac{\Delta \, \text{Bstat}}{\Delta \, \text{Bdyn}} \leqq 1.3.$$

FIG 1

FIG 2